(19) **Europäisches Patentamt / European Patent Office / Office européen des brevets**

(11) **EP 2 793 386 B1**

(12) **EUROPEAN PATENT SPECIFICATION**

(45) Date of publication and mention
of the grant of the patent:
**07.12.2016 Bulletin 2016/49**

(51) Int Cl.:
***H02M 7/12*** *(2006.01)*   ***H02M 1/42*** *(2007.01)*
***H02M 1/14*** *(2006.01)*

(21) Application number: **12858605.4**

(22) Date of filing: **12.12.2012**

(86) International application number:
**PCT/JP2012/007952**

(87) International publication number:
**WO 2013/088714 (20.06.2013 Gazette 2013/25)**

(54) **RECTIFIER DEVICE AND METHOD FOR CONTROLLING SAME**

GLEICHRICHTERVORRICHTUNG UND VERFAHREN ZU IHRER STEUERUNG

DISPOSITIF REDRESSEUR ET SON PROCÉDÉ DE CONTRÔLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2011 JP 2011273137**

(43) Date of publication of application:
**22.10.2014 Bulletin 2014/43**

(60) Divisional application:
**16175310.8 / 3 101 798**

(73) Proprietor: **Panasonic Corporation
Kadoma-shi, Osaka 571-8501 (JP)**

(72) Inventors:
• **DOYAMA, Yoshiaki**
  **Chuo-ku, Osaka 540-6207 (JP)**

• **KYOGOKU, Akihiro**
  **Chuo-ku, Osaka 540-6207 (JP)**
• **DAI, Xinhui**
  **Chuo-ku, Osaka 540-6207 (JP)**
• **YOSHIDA, Izumi**
  **Chuo-ku, Osaka 540-6207 (JP)**
• **KAWASAKI, Tomohiro**
  **Chuo-ku, Osaka 540-6207 (JP)**

(74) Representative: **Eisenführ Speiser
Patentanwälte Rechtsanwälte PartGmbB
Postfach 31 02 60
80102 München (DE)**

(56) References cited:
**JP-A- H07 322 629     JP-A- 2006 271 073
JP-A- 2010 263 775     US-A1- 2010 014 326**

## Description

## Technical Field

The present disclosure relates to a rectifier device that rectifies a single-phase AC power source used in home into almost DC, and drives a DC load, and/or converts again the obtained DC into AC with any frequency by an inverter circuit to drive an AC electric motor with a variable speed. For example, the present disclosure relates to a rectifier device that is applied to a device including a heat pump by compressing refrigerant by an electric compressor for cooling air, heating air, or freezing foods, and that controls a harmonic component included in power supply current.

## Background Art

A semiconductor switch such as a transistor has an advantage of being capable of switching electric power with high speed, but it has low resistance to an application of a reverse voltage. Therefore, when a variable control of an AC electric motor is performed by using an AC power source, a unit that temporarily converts AC into DC, and then, converts the DC into another AC is used (for example, see Patent Document 1).

FIG. 14 is a circuit configuration diagram of a conventional rectifier device described in Patent Document 1. As illustrated in FIG. 14, the rectifier device described in Patent Document 1 includes an AC power source 212, a reactor 213, a diode bridge (rectifier) 211, a semiconductor switch (switching element) 216, a diode 217, a smoothing capacitor 214, and a control unit 219. In the conventional rectifier device, the switching element 216, the diode 217, and the reactor 213 form a boosting chopper circuit 215, whereby current can freely be flown into the smoothing capacitor 214 even during a period when a voltage of the AC power source 212 is lower than a DC voltage of the smoothing capacitor 214. The control unit 219 drives the switching element 216 in order that an added waveform of AC voltage waveform information 220 and a function generator 223 and an AC current waveform obtained from a current transformer 221 are made equal to each other. It is set beforehand such that a distorted waveform that reduces a ripple voltage of the DC output is generated on the function generator 223.

Examples of a DC load 218 connected on both ends of the smoothing capacitor 214 include a compressor for a domestic air-conditioning unit. In the domestic air-conditioning unit, a compressor is driven by turning on or off a semiconductor switch group in an inverter circuit, whereby a heat pump operation is executed.

When the AC power source 212 uses single-phase AC, there is a moment when a power source voltage becomes zero. Therefore, even under an operation with high power factor, power ripples with a frequency twice the power source frequency. In order to absorb the ripple, the one that has a performance resistant to long-term ripple has to be selected as the smoothing capacitor 214.

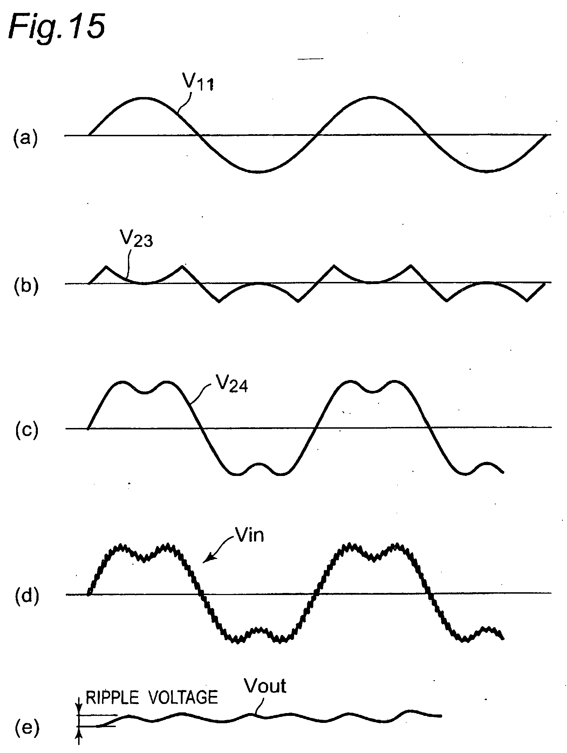

FIGS. 15(a) to (e) illustrate an operating waveform of the conventional rectifier device described in Patent Document 1. In the rectifier device described in Patent Document 1, a voltage signal V23 (distortion) of the voltage waveform generated by the function generator 223 illustrated in FIG. 15(b) is added to an output voltage of the AC power source 212, i.e., a voltage signal V11 (sinusoidal wave) indicating an input voltage illustrated in FIG. 15(a) to obtain a voltage signal V24 that is a current command illustrated in FIG. 15(c). The operating state of the boosting chopper circuit 215 is optimally controlled, with the result that a ripple voltage of the DC voltage in a terminal voltage, i.e., an output voltage Vout, of the smoothing capacitor 214 is reduced as illustrated in FIG. 15(e). Consequently, the smoothing capacitor 214 can be made compact.

Another prior art document is US 2010/0014326 A1, which discloses a power factor correction (PFC) circuit including inductor, a diode, a storage capacitor, a switch and a control unit. The input power has a voltage fluctuation $V_1$. The storage component absorbs a first voltage fluctuation and a switch regulation circuit absorbs a second voltage fluctuation $V_2$. Thus output voltage from the PFC circuit is not a conventional constant voltage but a voltage of a great ripple. The PFC circuit further has a harmonic regulation unit. The harmonic regulation unit generates a voltage signal containing 3rd harmonic. The control unit receives a feedback signal and the voltage signal containing 3rd harmonic to generate a reference to the inductor current. Therefore, the inductor current contains 3rd harmonic. Thus power fluctuation absorbed and released by the capacitor is smaller. As a result energy storage capacitance can be reduced.

## Citation List

### Patent Documents

    PLT 1: Unexamined Japanese Patent Publication No. S64-74060
    PLT 2: Unexamined Japanese Patent Publication No. 2001-45763

## Summary of Invention

### Technical Problem

However, in the conventional configuration described in Patent Documents 1 and 2 above, the voltage waveform of the AC power source is used. Therefore, when the AC voltage waveform V11 (sinusoidal wave) is distorted due to an influence of a power supply system, there is a possibility of excessively increasing harmonic current. In addition, a ripple voltage might be increased, depending upon the distortion of the AC voltage waveform. In a domestic air-conditioning unit, a load varies from hour to hour due to weather and ambient temperature, and the conventional technique does not disclose a specific method for a substantial problem of which function (distortion) has to be generated when the condition of the DC load varies from hour to hour as described above. For example, even when an optimum function output is obtained during a maximum load, for example, the effect is small if it is less frequently used. In an air-conditioning unit such as an inverter air-conditioner, in particular, the state where the load is not heavy so much is most frequently used.

There is a method of flowing current with an inverse number of a sinusoidal wave in order to reduce ripple of a smoothing capacitor. In this case, the contained harmonic current becomes very high, so that the harmonic current cannot comply with Class-A in IEC 61000-3-2, the international standard of a power source harmonic regulation in domestic electric appliances. The power factor is also reduced by about 40%.

The present disclosure is accomplished to solve the conventional problems, and aims to provide a rectifier device that can reduce DC ripple of a smoothing capacitor, while complying with a harmonic regulation standard, and to provide a rectifier device that can respond to a distortion of an AC power source voltage with any load.

### Solution to Problem

In order to accomplish the above aim, a rectifier device for controlling current of a single-phase AC power source comprises: a rectifier which is configured to rectify the current of the single-phase AC power source; a reactor which is connected to an output terminal of the rectifier; a semiconductor switch which is connected to the reactor and another output terminal of the rectifier; a smoothing portion which is connected to the other output terminal of the rectifier and a connection point of the reactor and the semiconductor switch via a diode; and a control circuit which is configured to make the single-phase AC power source short-circuited by the semiconductor switch via the reactor after the current of the single-phase AC power source is rectified by the rectifier and to control the current of the single-phase AC power source by allowing current flowing through the reactor to flow into the smoothing portion via the diode, when the semiconductor switch is opened; wherein the control circuit comprises: a sinusoidal waveform information forming portion which is configured to form sinusoidal waveform information having sinusoidal waveform whose amplitude is adjusted based on AC voltage phase information ($\theta$) of the AC power source and a difference between DC voltage information (Vdc) of both ends of the smoothing portion and a desired DC voltage information (Vdc*); a harmonic waveform information forming portion which is configured to form harmonic waveform information based on the AC voltage phase information ($\theta$) of the AC power source and a predefined limit value of a power source harmonic regulation; and a semiconductor switch control portion which is configured to control a ratio of a short-circuit and an opening of the semiconductor switch based on a difference between command information, which is formed by the semiconductor switch control portion by adding the sinusoidal waveform information formed by the sinusoidal waveform information forming portion and the harmonic waveform information formed by the harmonic waveform information forming portion, and actual current information outputted from the rectifier.

### Advantageous Effects of Invention

The rectifier device according to the present disclosure reduces ripple of a smoothing capacitor without being affected by a distortion of an AC power source voltage under any load, and suppresses harmonic so as to comply with a harmonic regulation standard, thereby being capable of making a smoothing capacitor compact.

## Brief Description of Drawings

FIG. 1 is a circuit block diagram illustrating an overall configuration of a rectifier device according to an embodiment 1 of the present disclosure.

FIG. 2 is a waveform chart of a harmonic waveform in the embodiment 1 of the present disclosure.

FIG. 3 is a graph illustrating a limit current value in IEC 6100-3-2 Class-A in a power source harmonic regulation.

FIG. 4 is a waveform chart when a control is executed only by a sinusoidal wave with input power of 1.5 kW in the embodiment 1 of the present disclosure, wherein (a) illustrates an AC voltage waveform, (b) illustrates an AC current waveform, and (c) illustrates an instantaneous power waveform.

FIG. 5 is a waveform chart in the case where harmonic is added to a sinusoidal wave with input power of 1.5 kW in the embodiment 1 of the present disclosure, wherein (a) illustrates an AC voltage waveform, (b) illustrates an AC current waveform, and (c) illustrates an instantaneous power waveform.

FIG. 6 is a waveform chart in the case where a control is executed only by a sinusoidal wave with input power of 3 kW in the embodiment 1 of the present disclosure, wherein (a) illustrates an AC voltage waveform, (b) illustrates an AC current waveform, and (c) illustrates an instantaneous power waveform.

FIG. 7 is a waveform chart in the case where harmonic is added to a sinusoidal wave with input power of 3 kW in the embodiment 1 of the present disclosure, wherein (a) illustrates an AC voltage waveform, (b) illustrates an AC current waveform, and (c) illustrates an instantaneous power waveform.

FIG. 8 is a waveform chart in the case where there is DC ripple in the embodiment 1 of the present disclosure, wherein (a) illustrates an AC voltage waveform, (b) illustrates an AC current waveform, and (c) illustrates an instantaneous power waveform.

FIG. 9 is a waveform chart in the case where the AC current waveform is formed into a waveform of an inverse number of the AC voltage waveform to set DC ripple as zero in the embodiment 1 of the present disclosure, wherein (a) illustrates an AC voltage waveform, (b) illustrates an AC current waveform, and (c) illustrates an instantaneous power waveform.

FIG. 10 is an overall circuit block diagram of another rectifier device according to a comparative example.

FIG. 11 is an overall circuit block diagram of another rectifier device according to a comparative example.

FIG. 12 is a waveform chart before an AC current waveform is improved according to an embodiment 2 of the present disclosure, wherein (a) illustrates an AC voltage, (b) illustrates an AC current command, (c) illustrates an absolute value of the AC current command, (d) illustrates an absolute value of actual AC current, and (e) illustrates actual AC current.

FIG. 13 is a waveform chart after an AC current waveform is improved according to the embodiment 2 of the present disclosure, wherein (a) illustrates an AC voltage, (b) illustrates an AC current command, (c) illustrates an absolute value of the AC current command, (d) illustrates an absolute value of actual AC current, and (e) illustrates actual AC current.

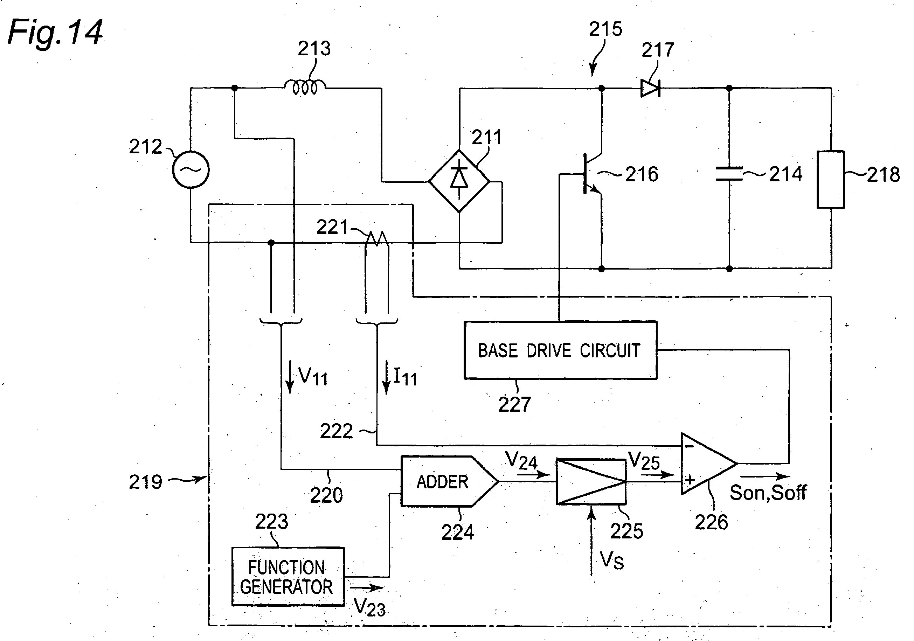

FIG. 14 is an overall circuit block diagram of a conventional rectifier device.

FIG. 15 is a waveform chart illustrating an operating principle of the conventional rectifier device.

## Description of Embodiments

A rectifier device in a first aspect of the present invention makes a single-phase AC power source short-circuited by a semiconductor switch via a reactor, and controls current of the single-phase AC power source by allowing current flowing through the reactor to flow into a smoothing portion via a diode, when the semiconductor switch is opened, wherein a total of a harmonic current waveform within a limit value of a harmonic regulation and a sinusoidal current waveform that is variable according to a DC load connected to the rectifier device is used as command information, and a ratio of a short-circuit and an opening of the semiconductor switch is adjusted based upon a difference between the command information and actual current information of the single-phase AC power source.

According to this configuration, the rectifier device can reduce ripple of the smoothing portion without being affected by a distortion of an AC voltage waveform of the AC power source, while complying with a harmonic regulation. Accordingly, the smoothing portion can be made compact.

In the rectifier device of the second aspect according to the first aspect of the present invention, the harmonic current waveform is a sum of sine function groups of odd orders, wherein an amplitude of each odd-order harmonic is set to be substantially equal to the allowable value under the harmonic regulation, and each odd-order harmonic becomes a zero phase when a fundamental wave expressed by a sine function becomes a zero phase.

A current waveform by which ripple of the smoothing portion is reduced can always be obtained by applying harmonic current within a range complying with the harmonic regulation. Accordingly, the rectifier device can reduce an instantaneous variation in input power, while complying with a harmonic regulation. Accordingly, the smoothing portion can be made compact.

In the rectifier device of the third aspect according to the first or second aspect of the present invention, the harmonic current waveform is attenuated in conjunction, when the amplitude of the sinusoidal current waveform is smaller than a predetermined value.

Since the harmonic current waveform is attenuated in conjunction when the load is small, the harmonic current according to the load is added, whereby the ripple of the smoothing portion can be reduced. In addition, active power can be confirmed by checking the amplitude of the sinusoidal wave portion. Specifically, the active power can be confirmed from the amplitude information of the sinusoidal wave, and hence, the load can be confirmed. Accordingly, the circuit efficiency is enhanced without a need of another calculating portion.

In the rectifier device of the fourth aspect according to the third aspect of the present invention, the predetermined value is a current value corresponding to about 570 W.

According to this configuration, when the current value of the sinusoidal current waveform is a value corresponding to about 570 W or more, harmonic current with the allowable maximum limit value of the harmonic regulation is added, and when the current value of the sinusoidal current waveform is less than about 570 W, the ripple of the smoothing portion can be reduced without adding the harmonic with the allowable maximum limit value of the harmonic regulation.

In the rectifier device of the fifth aspect according to any one of the first to fourth aspects of the present invention, after a single-phase AC power source is rectified by a rectifier, the rectifier device makes the single-phase AC power source short-circuited by the semiconductor switch via the reactor, and then, controls current of the single-phase AC power source by allowing current flowing through the reactor to flow into the smoothing portion via the diode, when the semiconductor switch is opened,

the rectifier device being configured to control such that a current command value at which a phase of the single-phase AC power source is zero degree or 180 degrees is replaced by a current command value of a phase before or after the phase of zero degree or the phase of 180 degrees.

According to this configuration, current flowing through the reactor has a single polarity, and the polarity switching at the AC power source is instantaneously realized by the operation of the rectifying circuit including the rectifier with the current after the rectification being kept as not zero, by utilizing a characteristic in which the current after the rectification cannot sharply be changed. Accordingly, current in the zero phase and 180-degree phase can sharply be switched.

In a control method of the sixth of the present invention, the control method in rectifier device according to any one of first to fourth aspects includes:

making a single-phase AC power source short-circuited by a semiconductor switch via a reactor after rectifying the single-phase AC power source by a rectifier, and then, controlling current of the single-phase AC power source by allowing current flowing through the reactor to flow into a smoothing portion via a diode, when the semiconductor switch is opened, and

replacing a current command value at which a phase of the single-phase AC power source is zero degree or 180 degrees by a current command value of a phase before or after the phase of zero degree or the phase of 180 degrees.

According to this control method, current flowing through the reactor has a single polarity, and the polarity switching at the AC power source is instantaneously realized by the operation of the rectifying circuit including the rectifier with the current after the rectification being kept as not zero, by utilizing a characteristic in which the current after the rectification cannot sharply be changed. Accordingly, current in the zero phase and 180-degree phase can sharply be switched.

Embodiments according to the present disclosure will be described with reference to the drawings. The present disclosure is not limited by the embodiments.

(Embodiment 1)

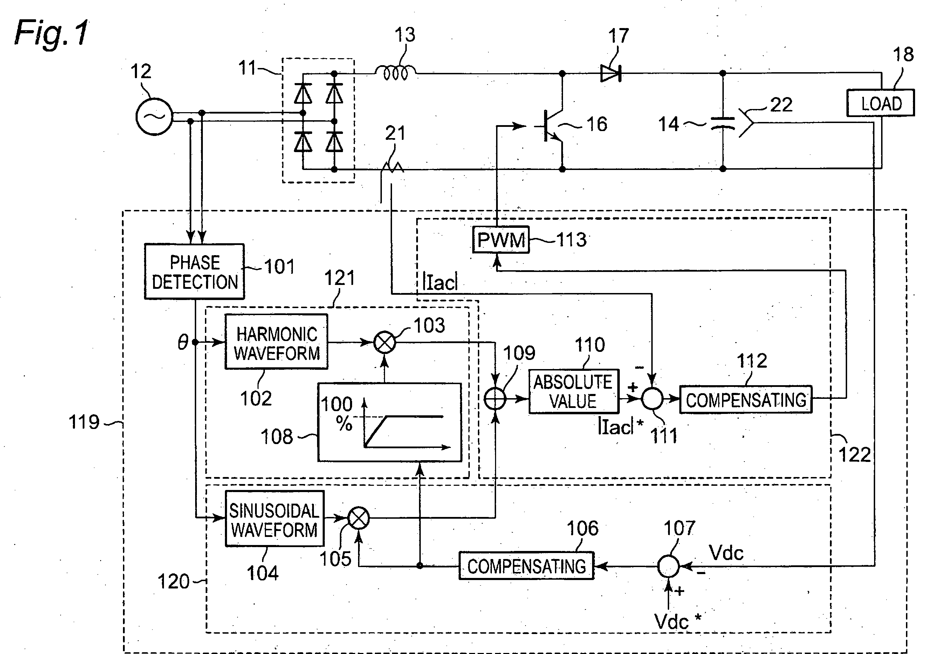

FIG. 1 is a circuit diagram illustrating an overall configuration of a rectifier device according to an embodiment 1 of the present disclosure.

As illustrated in FIG. 1, the rectifier device according to the embodiment 1 of the present disclosure includes a single-phase AC power source 12, a rectifying diode bridge (rectifier) 11, a reactor 13, a smoothing capacitor 14, a semiconductor switch 16, a DC load 18, a current detection portion 21, a DC voltage detection portion 22, and a control circuit 119.

In FIG. 1, the circuit is configured such that the AC power source 12 can be short-circuited by the semiconductor switch 16 via the rectifying diode bridge 11 and the reactor 13. This short-circuit includes the current detection portion 21 to be capable of detecting current information from the AC power source. The smoothing capacitor 14 and the DC load 18 are connected between one end of the rectifying diode bridge 11 and a connection point of the reactor 13 and the semiconductor switch 16 via a diode 17. The DC voltage detection portion 22 is also provided to detect DC voltage information on both ends of the smoothing capacitor 14. AC voltage phase information, the current information from the AC power source 12, and DC output voltage information are inputted to the control circuit 119 controlling this circuit, and the control circuit 119 outputs drive information for turning ON/OFF the semiconductor switch 16. According to this circuit configuration, power can be supplied to the load with any current waveform from the AC power source 12 by a reverse blocking operation of the diode 17, only if a DC voltage Vdc is set higher than an instantaneous voltage of the AC power source, whereby this circuit configuration can be used for enhancing a power factor of a power source and power supply harmonic.

The control circuit 119 includes a phase detection portion 101 that detects AC voltage phase information of the AC power source 12, a sinusoidal waveform information forming portion 120 that forms sinusoidal waveform information from the AC voltage phase information and the DC voltage information detected by the current detection portion 21, a harmonic waveform information forming portion 121 that forms harmonic waveform information from the AC voltage phase information, and a semiconductor switch control portion 122 that controls ON/OFF drive of the semiconductor switch 16 based upon command information formed by adding the sinusoidal waveform information and the harmonic waveform information and the current information detected by the current detection portion 21.

The phase detection portion 101 detects the AC voltage phase information of the AC power source 12. The AC voltage phase information detected by the phase detection portion 101 is inputted to the sinusoidal waveform information forming portion 120 and the harmonic waveform information forming portion 121.

The sinusoidal waveform information forming portion 120 includes a sinusoidal waveform generating portion 104 that acquires an instantaneous value of the sinusoidal wave from the AC voltage phase information detected by the phase detection portion 101, a first comparator 107 that acquires a difference by comparing DC voltage information Vdc detected by the DC voltage detection portion 22 and desired DC voltage information Vdc*, a first compensating portion 106 that outputs information for stabilizing a control from the difference acquired by the first comparator 107, and a first multiplying portion 105 that receives the sinusoidal wave acquired by the sinusoidal waveform generating portion 104 and the information outputted from the first compensating portion 106.

The harmonic waveform information forming portion 121 includes a harmonic waveform generating portion 102 that outputs a harmonic waveform from the AC voltage phase information detected by the phase detection portion 101, an attenuation command generating portion 108 that generates an attenuation command from the output of the first compensating portion 106, and a second multiplying portion 103 that receives the harmonic waveform outputted from the harmonic waveform generating portion 102 and the attenuation command generated from the attenuation command generating portion 108.

The semiconductor switch control portion 122 includes an adding portion 109 that adds the sinusoidal waveform information and the harmonic waveform information, an absolute value conversion portion 110 that converts the added information into an absolute value, a second comparator 111 that acquires a difference by comparing the information (command information) converted into the absolute value and the current information detected by the current detection portion 21, a second compensating portion 112 that outputs information for stabilizing a current control from the difference acquired by the second comparator 111, and a pulse width modulation portion 113 that pulse-drives the semiconductor switch 16 according to the information outputted from the second compensating portion 112.

The operation and effect of the rectifier device thus configured will next be described.

Firstly, the control circuit 119 detects AC voltage phase information $\theta$ of the AC power source 12 by the phase detection portion 101. The method of detecting the AC voltage phase information $\theta$ includes the method described in Patent Document 2 made by the same inventors.

Instantaneous current command information is calculated based upon the AC voltage phase information $\theta$ detected by this method. One of the AC voltage phase information $\theta$ is inputted to the sinusoidal waveform generating portion 104 to acquire the instantaneous value of the sinusoidal wave according to the AC voltage phase information $\theta$. The acquired instantaneous value of the sinusoidal wave is inputted to the first multiplying portion 105. The first multiplying portion 105 also receives the information from the first compensating portion 106 for stabilizing the control, this information being acquired by the first comparator 107 from the difference between the desired DC voltage information Vdc* and the actual DC voltage information Vdc. Specifically, the information of the sinusoidal wave is enlarged or reduced according to the deviation of the DC output voltage. In other words, if the output voltage is lower than the desired value, the amplitude of the sinusoidal wave is increased, and if higher than the desired value, the amplitude of the sinusoidal wave is reduced. Thus, the control for maintaining the desired DC voltage can be realized, even if a load is changed.

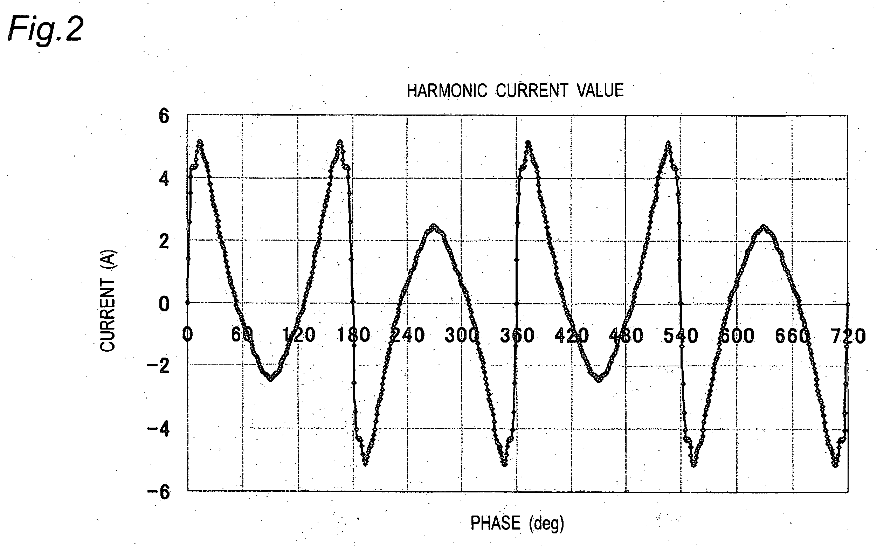

Another AC voltage phase information $\theta$ is inputted to the harmonic waveform generating portion 102. The specific waveform of the harmonic waveform is illustrated in FIG. 2. The method of calculating the waveform will be described later. The output of the harmonic waveform generating portion 102 is inputted to the second multiplying portion 103. To the second multiplying portion 103, the information from the attenuation command generating portion 108 from the output result of the first compensating portion 106 deciding the amplitude of the above-described sinusoidal wave is inputted. The attenuation command generating portion 108 does not attenuate the harmonic, if the output from the first compensating portion 106 is a predetermined value or more, and if it is the predetermined value or less, the attenuation command generating portion 108 generates the attenuation command for attenuating the harmonic with a ratio of the output value of the first compensating portion 106 and the predetermined value. Specifically, if the output of the first compensating portion 106 assumes a fixed value or less, the attenuation command generating portion 108 attenuates the output of the harmonic waveform generating portion 102.

The sinusoidal waveform information that is the sinusoidal waveform whose amplitude is adjusted and the harmonic waveform information that is the harmonic waveform whose amplitude is adjusted are inputted and added by the adding portion 109. The added information is converted into an absolute value by the absolute value conversion portion 110. The information converted into the absolute value is defined as command information |Iac| * of the absolute value of the AC input current. The command information |Iac|* is inputted to the second comparator 111 that calculates the difference with current information |Iac| detected by the current detection portion 21. Since the current detection portion 21 detects current information after the rectification of the AC power source 12 by the rectifying diode bridge 11, the absolute value information |Iac| of the AC current can be acquired.

The difference calculated by the second comparator 111 is inputted to the second compensating portion 112 that outputs the information for stabilizing the current control. The information outputted from the second compensating portion 112 is inputted to the pulse width modulation portion 113 for pulse-driving the semiconductor switch 16. Specifically, the second compensating portion 112 controls to increase the ratio of turning OFF the semiconductor switch 16 in the case of |Iac|* < |Iac|, and increase the ratio of turning ON the semiconductor switch 16 in the case of |Iac|* ≥ |Iac|. According to this configuration, the semiconductor switch control circuit 122 can turn ON or OFF the semiconductor switch 16 with the optimum ON/OFF ratio. When the ratio of turning ON the semiconductor switch 16 is increased, current through the reactor 13 increases, whereby high power can be supplied to the load 18.

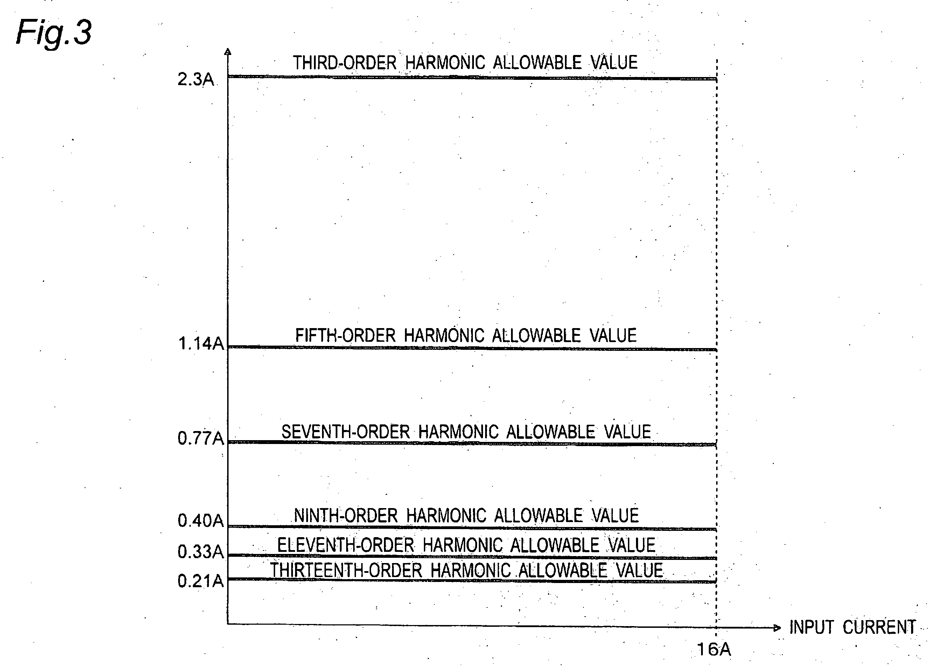

Next, the harmonic waveform outputted from the harmonic waveform generating portion 102 will be described in detail. The harmonic waveform used in the embodiment 1, i.e., the waveform illustrated in FIG. 2, is derived from a value of Class-A in IEC 61000-3-2 that is the international standard of power source harmonic regulation. FIG. 3 is an effective value of allowable current under the international standard of power source harmonic regulation, when the effective value of the AC voltage is 230 V. In order to comply with the international standard of the power source harmonic regulation, as illustrated in FIG.3, it is necessary to set an allowable value of third-order harmonic to 2.3 A or less, to set an allowable value of fifth-order harmonic to 1.14 A or less, set an allowable value of seventh-order harmonic to 0.77 A or less, and so on. This determination is made up to the fortieth order, and the larger the order becomes, the smaller the allowable value assumes.

The harmonic waveform used in the embodiment 1 is formed by adding the allowable values of all odd-order harmonic out of the determination as a sine function starting with the same phase, and it is expressed by an equation (1).
[Equation 1]

$$y = 2.3 \times \sin(3\theta) + 1.14 \times \sin(5\theta) + 0.77 \times \sin(7\theta) + 0.4 \times \sin(9\theta) + 0.33 \times \sin(11\theta) + \cdots (1)$$

Notably, y in the equation (1) represents the harmonic waveform, and θ indicates the AC voltage phase information. As expressed by the equation (1), the harmonic waveform in the embodiment 1 is a sum of sine function groups of odd orders, wherein the amplitude of each order harmonic in the harmonic waveform is set to be substantially equal to the allowable value under the harmonic regulation, and each order harmonic becomes a zero phase when a fundamental wave expressed by a sine function becomes a zero phase.

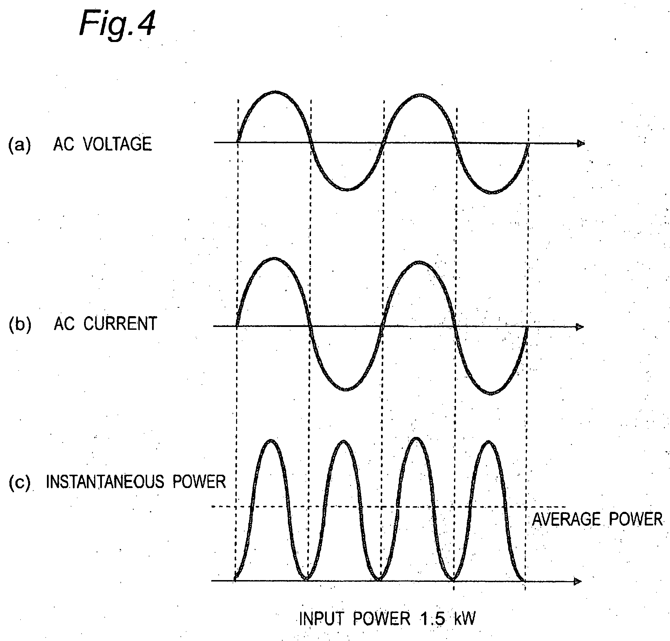

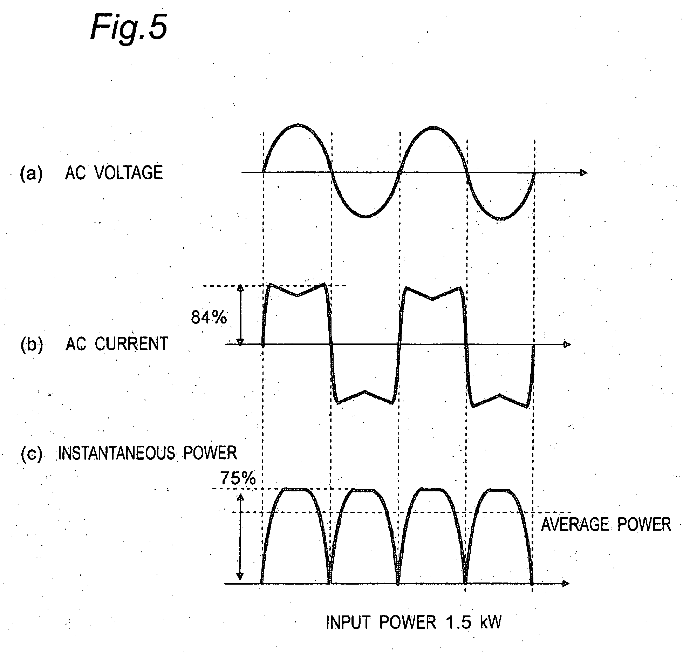

In the embodiment 1, power ripple of the smoothing capacitor 14 is decreased by adding the harmonic to the sinusoidal wave. The case where the harmonic expressed by the above-mentioned equation (1) is added to the sinusoidal wave with input power of 1.5 kW will be described in detail with reference to FIGS. 4 and 5, for example. FIG. 4 is a waveform chart in the case where the control is performed only by the sinusoidal wave with the input power of 1.5 kW, while FIG. 5 is a waveform chart in the case where the harmonic is added to the sinusoidal wave with the input power of 1.5 kW. In each figure, (a) is the waveform of the AC voltage, (b) is the waveform of the AC current, and (c) is the waveform of instantaneous power. The AC voltage waveforms illustrated in FIG. 4(a) and FIG. 5(a) are the same. When the harmonic is added to the sinusoidal wave, the waveform of the AC current becomes the one illustrated in FIG. 5(b). The waveform of the instantaneous power becomes the one illustrated in FIG. 5(c).

In this case, the maximum instantaneous value of the AC current reduces to about 84% of that in the waveform of the AC current by the sinusoidal wave illustrated in FIG. 4(b). The maximum value of the instantaneous power also reduces to about 75% of that in the waveform of the instantaneous power by the sinusoidal wave illustrated in FIG. 4(c). As a result, when the harmonic is added to the sinusoidal wave, the maximum instantaneous value of the instantaneous power can be reduced, resulting in that the power ripple that is to be compensated by the smoothing capacitor 14 is reduced. Consequently, a compact smoothing capacitor 14 can be used.

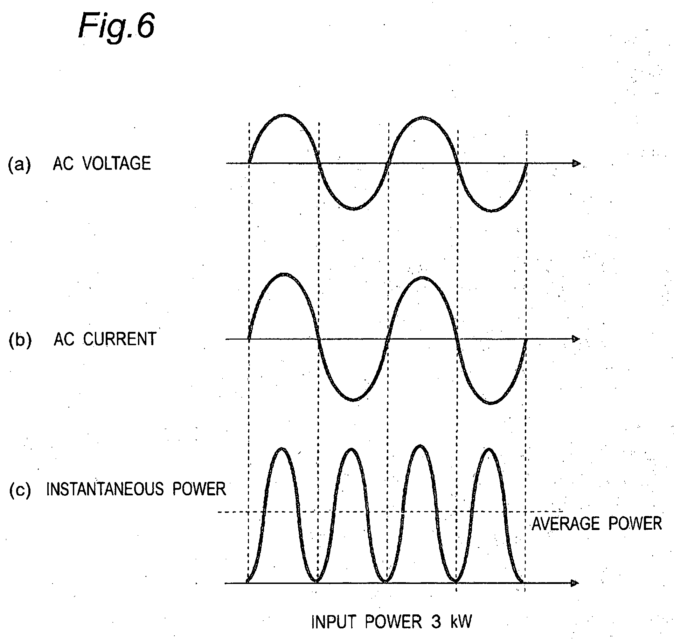

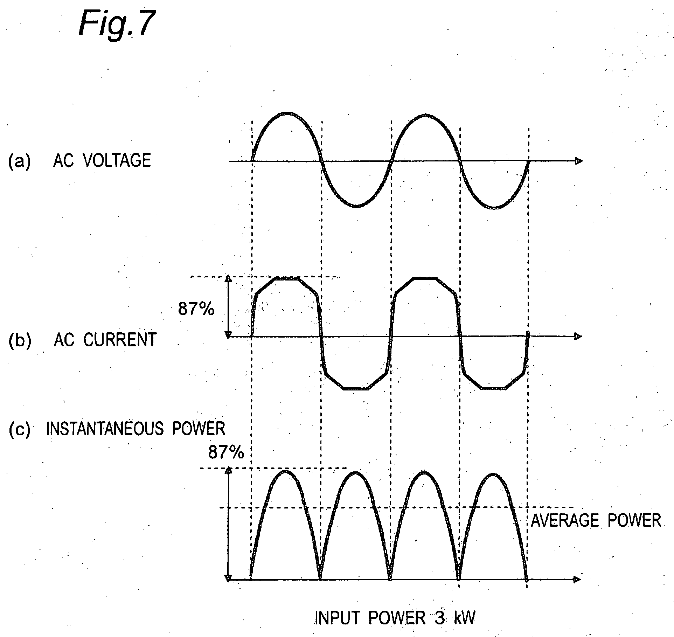

As another example, the case where the harmonic expressed by the equation (1) is added to the sinusoidal wave with input power of 3 kW will be described in detail with reference to FIGS. 6 and 7. FIG. 6 is a waveform chart in the case where the control is performed only by the sinusoidal wave with the input power of 3 kW, while FIG. 7 is a waveform chart in the case where the harmonic is added to the sinusoidal wave with the input power of 3 kW. In each figure, (a) is the waveform of the AC voltage, (b) is the waveform of the AC current, and (c) is the waveform of instantaneous power. The AC voltage waveforms illustrated in FIG. 6(a) and FIG. 7(a) are the same. When the harmonic is added to the sinusoidal wave, the waveform of the AC current becomes the one illustrated in FIG. 7(b). The waveform of the instantaneous power becomes the one illustrated in FIG. 7(c). In this case, the maximum value of the AC current waveform reduces to about 87% of that in the waveform of the AC current by the sinusoidal wave illustrated in FIG. 6(b). The maximum instantaneous value of the instantaneous power also reduces to about 87% of that in the waveform of the instantaneous power by the sinusoidal wave illustrated in FIG. 6(C). As a result, the similar effect in the case of the input power of 1.5 kW described above can be obtained even in the case of the input power of 3 kW. Specifically, the instantaneous value of the instantaneous power can be reduced, resulting in that the power ripple that is to be compensated by the smoothing capacitor 14 is reduced. Consequently, the smoothing capacitor 14 can be made compact.

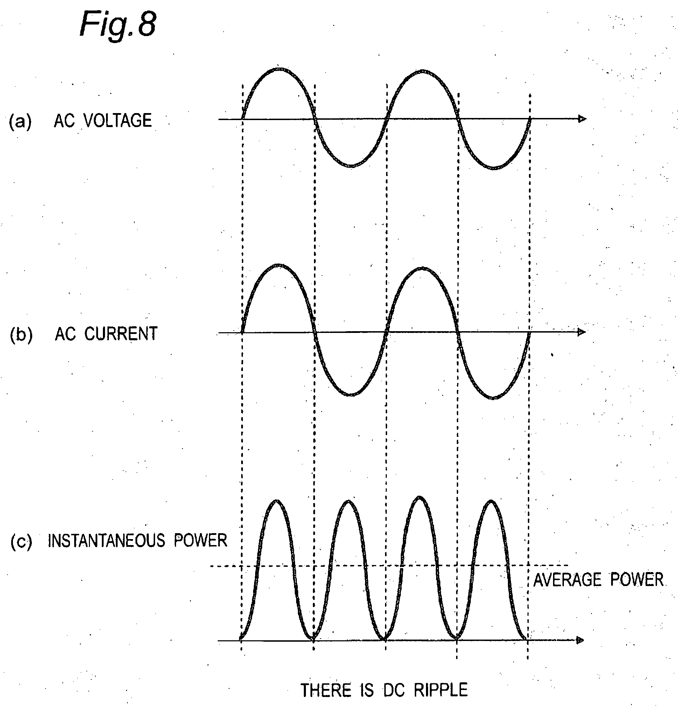

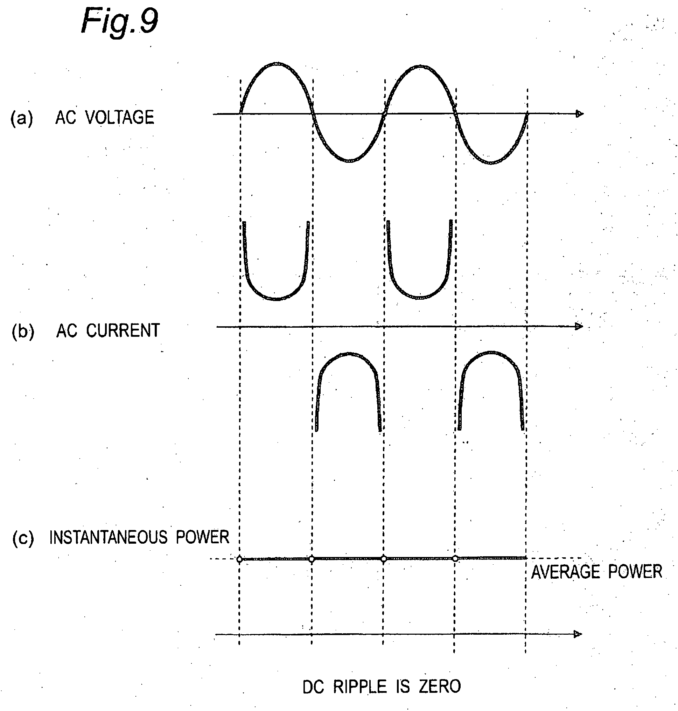

In the present disclosure, the principle why the smoothing capacitor 14 can be made compact by reducing the power ripple will be described in detail with reference to FIGS. 8 and 9. FIG. 8 is a waveform chart in the case where the control is performed only by the sinusoidal wave, while FIG. 9 is a waveform chart in the case where the waveform of the AC current is set as the waveform of the inverse number of the AC voltage waveform. In each figure, (a) is the waveform of the AC voltage, (b) is the waveform of the AC current, and (c) is the waveform of instantaneous power. The AC voltage waveforms illustrated in FIG. 8(a) and FIG. 9(a) are the same. In the case of the AC voltage waveform illustrated in FIG. 8(a) and the AC current waveform illustrated in FIG. 8(b), the waveform of the instantaneous power illustrated in FIG. 8(c) is acquired. In the waveform of the instantaneous power illustrated in FIG. 8(c), the instantaneous power varies, so that DC ripple occurs. Therefore, it is found that the DC ripple becomes zero if the instantaneous power is made constant. Specifically, in order to make the instantaneous power constant, the waveform of the AC current illustrated in FIG. 9(b) is required. However, this waveform of the AC current includes very high odd-order harmonics, wherein the value of harmonic exceeds the harmonic regulation value for all orders in the range where the input power is about 570 W or more. This harmonic group is a sine function in which the phases of all odd orders start from the same zero phase, when the fundamental wave is expressed by the sine function. From above, the best way to reduce the DC ripple for downsizing the smoothing capacitor 14, and to comply with the harmonic regulation is to include harmonics within the harmonic regulation value.

When the input power is less than 570 W, and the fundamental wave is small, it is unnecessary to add the harmonic with the allowable maximum value of the harmonic regulation. Therefore, within the range where the input power decreases, it is only necessary to attenuate the harmonic waveform according to the decrease in the input power. Specifically, the harmonic waveform may be attenuated by generating the attenuation command from the attenuation command generating portion 108. In addition, since the amplitude of the fundamental wave reflects active power (input power), the magnitude of the active power can be determined by the amplitude information of the fundamental wave. The amplitude information of the fundamental wave is the output information itself from the first compensating portion 106 in FIG. 1. Accordingly, this information can be acquired from the first compensating portion 106, whereby the circuit efficiency can be enhanced without a need of another calculating portion.

As described above, the rectifier device according to the embodiment 1 of the present disclosure includes the phase detection portion 101 that detects the AC voltage phase information θ of the AC power source 12, the harmonic waveform generating portion 102 that adds sine function groups that becomes a zero phase when a fundamental waveform of the AC power source expressed by a sinusoidal wave becomes a zero phase and odd-order harmonic signals, each having an amplitude not exceeding the harmonic regulation standard, and the sinusoidal wave generating portion 104 that generates the fundamental wave. The amplitude of the output from the sinusoidal waveform generating portion 104 is adjusted based upon the deviation between the actual DC voltage information Vdc and the desired DC voltage information Vdc*. When the adjusted amplitude information is a predetermined value or less, the attenuation command generating portion 108 that attenuates the harmonic with a ratio between the waveform output to which the odd-order harmonics are added and the predetermined value generates the attenuation command attenuating the harmonic. The result obtained by adding the sinusoidal wave whose amplitude is adjusted and the waveform output to which the odd-order harmonics are added and to which the attenuation adjustment is performed is used as the current command information. Therefore, the rectifier device can realize the reduction in size of the smoothing capacitor 14, while complying with the harmonic regulation, under any load state by adding current within the range of the power source harmonic regulation.

Under the load state of a certain level or more (in which the input power is about 570 W or more), the ripple of the smoothing capacitor 14 cannot completely be canceled within the range of the harmonic current allowed by the harmonic regulation. By adding the current waveform to which the maximum allowable harmonic current is added, the current waveform by which the smoothing capacitor 14 can be made compact and the rectifier device can comply with the harmonic regulation can always be obtained.

When the load is less than a certain level (when the input power is less than 570 W), the attenuation command generating portion 108 generates the attenuation command with a ratio relative to the certain level in order to attenuate the harmonic current with a limit value allowed by the harmonic regulation. Thus, when the load is small, the smoothing capacitor 14 can be made compact without adding the harmonic current with the limit value allowed by the harmonic regulation.

In addition, when the attenuation command generating portion 108 attenuates the harmonic according to the load, the harmonic components become reactive power. Therefore, the active power can be confirmed by checking the amplitude of the sinusoidal wave portion. Specifically, the active power (input power) can be confirmed from the amplitude information of the sinusoidal wave, and hence, the load can be confirmed. Accordingly, another calculating portion for detecting the load is not required.

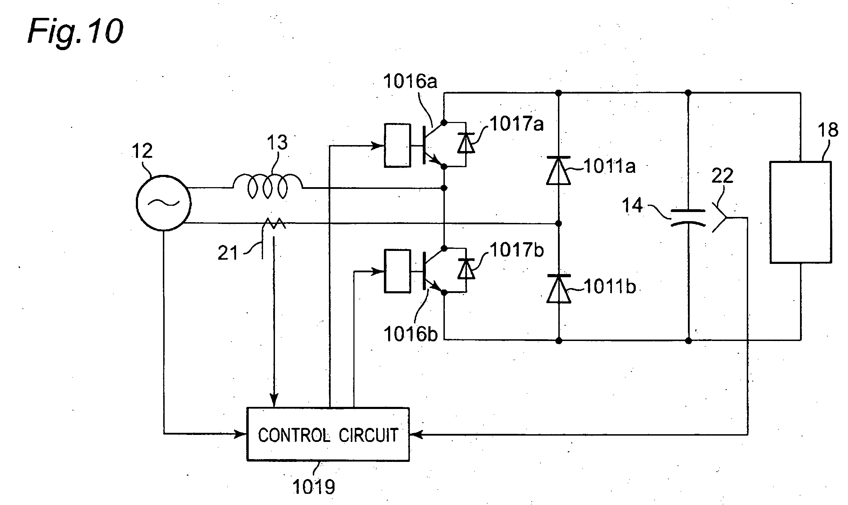

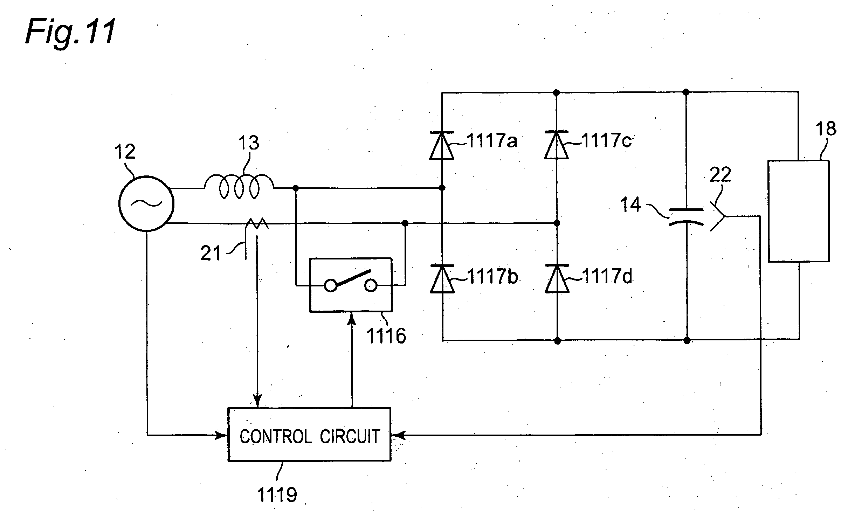

As comparative examples for embodiment 1 of the present disclosure, the circuit configuration may be set as those illustrated in FIGS. 10 and 11. FIG. 10 illustrates a circuit configuration including a hybrid bridge circuit having a reactor 13 arranged close to an AC power source 12, and semiconductor switches 1016a and 1016b on one end of a diode bridge. FIG. 11 illustrates a circuit configuration in which a reactor 13 is arranged close to an AC power source 12, and a bidirectional semiconductor switch 1116 is short-circuited and opened before the diode bridge. The effect similar to the rectifier device according to the embodiment 1 of the present disclosure can be obtained even by the circuit configuration illustrated in FIGS. 10 and 11. In addition, in the circuit configurations illustrated in FIGS. 10 and 11, the number of components is reduced, so that they can bring an effect of excellent circuit efficiency.

In the embodiment 1, the limit value of the harmonic regulation is used as it is for the value of the harmonic waveforms. This is the command value of the current, and it is easily considered from the basic principle of the present disclosure that the control is performed by using a value smaller than the harmonic regulation value, assuming the variation in the current detection sensitivity and imperfect control accuracy.

(Embodiment 2)

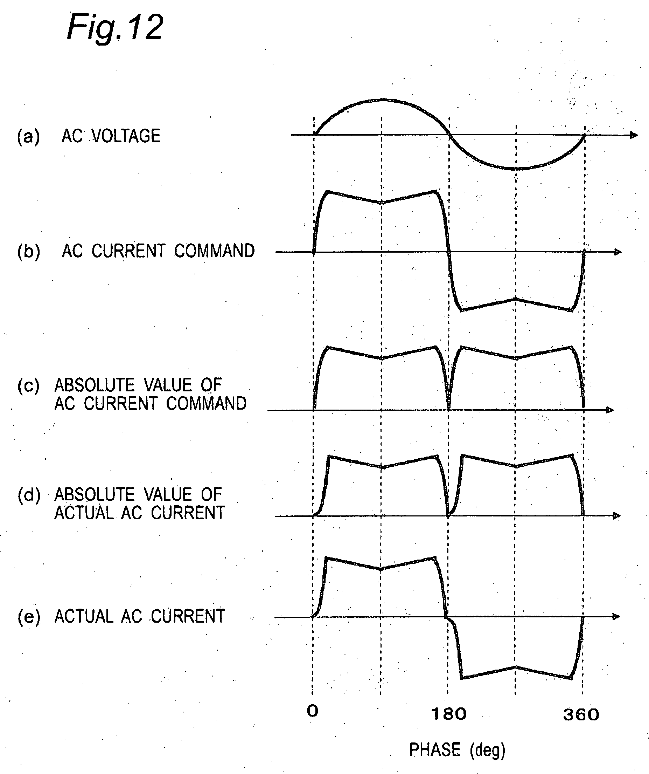

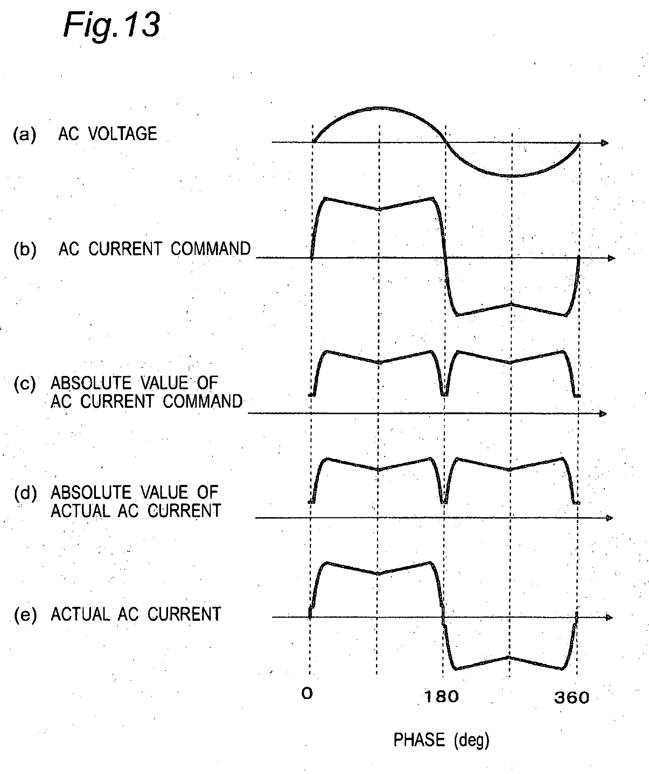

An embodiment 2 of the present disclosure describes a method of further improving the AC current waveform. FIG. 12 is a waveform chart of the AC current waveform before the improvement according to the embodiment 2 of the present disclosure, while FIG. 13 is a waveform chart of the improved AC current waveform. In each figure, (a) illustrates the AC voltage, (b) illustrates an AC current command, (c) illustrates an absolute value of the AC current command, (d) illustrates an absolute value of actual AC current, and (e) illustrates the actual AC current. The overall circuit configuration in the embodiment 2 is the same as the circuit configuration in the embodiment 1.

Firstly, the waveform of the AC current waveform before the improvement will be described. The AC current command including the harmonic illustrated in FIG. 12(b) is generated according to the AC voltage phase information θ illustrated in FIG. 12(a). Then, the AC current command is converted into an absolute value by the absolute value conversion portion 110, whereby the waveform of the absolute value of the AC current command illustrated in FIG. 12(c) is obtained. When a current control is performed to this waveform by executing the current detection, the current control might not correctly be executed.

When current is detected and a feedback control is performed according to the difference from the AC current command, in particular, the rectifier device cannot respond to the sharp change at a zero-degree phase and a 180-degree phase, so that the control might be delayed. For example, as indicated by the waveform of the absolute value of the actual AC current illustrated in FIG. 12(d), the control is executed with some delay at the zero-degree phase and the 180-degree phase. When this waveform is viewed from the AC side, the waveform is formed having a new distortion at the voltage phases of zero degree and 180 degrees as indicated by the actual AC current waveform illustrated in FIG. 12(e).

Next, the waveform formed by improving the AC current waveform by using the control method according to the embodiment 2 will be described. The waveforms illustrated in FIG. 13(a) and FIG. 13(b) are the same as the waveforms illustrated in FIG. 12(a) and FIG. 12(b), respectively. FIG. 13(c) illustrates an absolute value of the AC current command that is an operating waveform for improving this distortion. The waveform in FIG. 13(c) is obtained by converting the AC current command illustrated in FIG. 13(b) into an absolute value. In the waveform in FIG. 13(c), the absolute values, which originally become zero, of the AC current command in the zero-degree phase and the 180-degree phase are replaced by the values before or after these phases, in order to prevent the absolute value in these phases from becoming zero. The values before or after these phases mean the value before the waveform becomes sharp and the value by which the control is not delayed. For example, it is a value of a phase 2 or 3 degrees before or after the zero-degree phase and the 180-degree phase. It is understood that, according to this structure, the absolute value of the AC current command does not become zero even in the zero-degree phase and the 180-degree phase, and the sharp component is reduced. Since the sharp component is reduced in the AC current command, the following property of the actual current can be enhanced as illustrated by the waveform in FIG. 13(d). When this waveform is observed on the AC side, the positive side and the negative side are automatically switched by the rectifying diode bridge 11, so that the current can greatly change on the AC side, as illustrated by the actual AC current waveform illustrated in FIG. 13(e). Consequently, the distortion in the waveform of the AC current command is reduced.

As described above, the absolute values of the AC current command in the AC voltage phases of zero degree and 180 degrees are replaced by the values before or after these phases, whereby an AC current waveform that can reduce a generation of new distortion can be realized without enhancing the following property of the current feedback control system.

As described above, in the embodiment 2, after the AC power source 12 is rectified by the rectifier 11, the AC power source 12 is short-circuited and opened via the reactor 13, whereby current flowing through the reactor 13 has a single polarity, and the AC current command information of the AC current command, which is converted into an absolute value, in the vicinity of the zero phase and 180-degree phase is set to a value not zero. Thus, the polarity switching at the AC power source is instantaneously realized by the operation of the rectifying circuit including the rectifier with the current after the rectification being kept as zero by utilizing the property in which the current after the rectification cannot sharply change. Accordingly, the current in the zero phase and the 180-degree phase can sharply be switched. Consequently, the precision in the actual current waveform can be enhanced.

**Industrial Applicability**

The rectifier device according to the present disclosure operates to always reduce power ripple under any load state, while complying with the harmonic regulation. Therefore, the smoothing capacitor can be made compact. In addition, since the maximum instantaneous current becomes small on the circuit, the other circuit components can also be made compact.

The rectifier device according to the present disclosure is applicable not only to an air-conditioning device such as an inverter air-conditioner but also to a cooking device, such as a microwave oven, having a DC load with a large operating range, for example, having a large power control range for realizing a variety of cooking methods.

**Reference Signs List**

11: RECTIFYING DIODE BRIDGE (RECTIFIER)
12: AC POWER SOURCE
13: REACTOR
14: SMOOTHING CAPACITOR
16: SEMICONDUCTOR SWITCH
17: DIODE
18: DC LOAD
21: CURRENT DETECTION PORTION
22: DC VOLTAGE DETECTION PORTION
101: PHASE DETECTION PORTION
102: HARMONIC WAVEFORM GENERATING PORTION
103: SECOND MULTIPLYING PORTION
104: SINUSOIDAL WAVEFORM GENERATING PORTION
105: FIRST MULTIPLYING PORTION
106: FIRST COMPENSATING PORTION
107: FIRST COMPARATOR
108: ATTENUATION COMMAND GENERATING PORTION
109: ADDING PORTION
110: ABSOLUTE VALUE CONVERSION PORTION
111: SECOND COMPARATOR
112: SECOND COMPENSATING PORTION
113: PULSE WIDTH MODULATION PORTION
119: CONTROL CIRCUIT
120: SINUSOIDAL WAVEFORM INFORMATION FORMING PORTION
121: HARMONIC WAVEFORM INFORMATION FORMING PORTION
122: SEMICONDUCTOR SWITCH CONTROL PORTION
1011a,1011b: DIODE
1016a, 1016b: SEMICONDUCTOR SWITCH
1017a, 1017b: DIODE
1019: CONTROL CIRCUIT
1116: SEMICONDUCTOR SWITCH
1117a, 1117b, 1117c, 1117d: DIODE
1119: CONTROL CIRCUIT

**Claims**

1. A rectifier device for controlling current of a single-phase AC power source (12) comprising:

    a rectifier (11) which is configured to rectify the current of the single-phase AC power source (12);
    a reactor (13) which is connected to an output terminal of the rectifier (11);
    a semiconductor switch (16) which is connected to the reactor (13) and another output terminal of the rectifier (11);
    a smoothing portion (14) which is connected to the other output terminal of the rectifier (11) and to a connection point of the reactor (13) and the semiconductor switch (16) via a diode (17); and
    a control circuit (119) which is configured to make the single-phase AC power source (12) short-circuited by the semiconductor switch (16) via the reactor (13) and the rectifier (11) and to control the current of the single-phase AC power source (12) by allowing current flowing through the reactor (13) to flow into the smoothing portion (14) via the diode (17), when the semiconductor switch (16) is opened;
    wherein the control circuit (119) is **characterized by**:

    a sinusoidal waveform information forming portion (120) which is configured to form sinusoidal waveform information having sinusoidal waveform whose amplitude is adjusted based on AC voltage phase information ($\theta$) of the AC power source (12) and a difference between DC voltage information (Vdc) of both ends of the smoothing portion (14) and a desired DC voltage information (Vdc*);
    a harmonic waveform information forming portion (121) which is configured to form harmonic waveform information based on the AC voltage phase information ($\theta$) of the AC power source (12) and a predefined limit value of a power source harmonic regulation; and
    a semiconductor switch control portion (122) which is configured to control a ratio of a short-circuit and an opening of the semiconductor switch (16) based on a difference between command information, which is formed by the semiconductor switch control portion (122) by subtracting actual current information outputted from the rectifier (11) from a sum of the sinusoidal waveform information formed by the sinusoidal waveform information forming portion (120) and the harmonic waveform information formed by the harmonic waveform information forming portion (121).

2. The rectifier device according to claim 1, wherein the harmonic current waveform of the harmonic waveform information is a sum of sine function groups of odd orders, wherein an amplitude of each order harmonic is set to be substantially equal to the allowable value under the harmonic regulation, and each order harmonic becomes a zero phase when a fundamental wave expressed by a sine function becomes a zero phase.

3. The rectifier device according to claim 1 or 2, wherein the harmonic waveform information forming portion (121) is configured to attenuate the harmonic current waveform of the harmonic waveform information, when the amplitude of the sinusoidal current waveform of the sinusoidal waveform information is smaller than a predetermined value.

4. The rectifier device according to claim 3, wherein the predetermined value is a current value corresponding to about 570 W.

5. The rectifier device according to any one of claims 1 to 4, wherein the semiconductor switch control portion (122) is configured to control such that a current command value at which a phase of the single-phase AC power source (12) is zero degree or 180 degrees is replaced by a current command value of a phase before or after the phase of zero degree or the phase of 180 degrees.

**Patentansprüche**

1. Gleichrichtervorrichtung zum Steuern von Strom aus einer einphasigen Wechselstromquelle (12) umfassend:

    einen Gleichrichter (11), der konfiguriert ist, den Strom aus der einphasigen Wechselstromquelle (12) gleichzurichten;
    einen Reaktor (13), der mit einem Ausganganschluss des Gleichrichters (11) verbunden ist;
    einen Halbleiterschalter (16), der mit dem Reaktor (13) und einem anderen Ausgangsanschluss des Gleichrichters (11) verbunden ist;
    einen Glättungsbereich (14), der mit dem anderen Ausgangsanschluss des Gleichrichters (11) und mit einem Verbindungspunkt des Reaktors (13) und des Halbleiterschalters (16) durch eine Diode (17) verbunden ist; und

einen Steuerschaltkreis (119), der konfiguriert ist, die einphasige Wechselstromquelle (12) mittels des Halbleiterschalters (16) durch den Reaktor (13) und den Gleichrichter (11) kurzzuschließen, und den Strom der einphasigen Wechselstromquelle (12) zu steuern, dadurch, dass es dem Strom, der durch den Reaktor (13) fließt, erlaubt ist, durch die Diode (17) in den Glättungsbereich (14) zu fließen, wenn der Halbleiterschalter (16) geöffnet ist;

wobei die Steuerschaltung (119) **gekennzeichnet ist, durch**:

einen Sinuswellenforminformationsbildungsbereich (120), der konfiguriert ist, Sinuswellenforminformation zu bilden, die eine Sinuswellenform hat, deren Amplitude basierend auf der Wechselspannungsphaseninformation ($\ominus$) der Wechselstromquelle (12) und einer Differenz zwischen Gleichspannungsinformationen ($V_{DC}$) der beiden Enden des Glättungsbereichs (14) und einer gewünschten Gleichspannungsinformation ($V_{DC*}$) angepasst wird;

einen Harmonische-Wellenforminformationsbildungsbereich (121), der konfiguriert ist, Harmonische-Wellenforminformation zu bilden, basierend auf der Wechselspannungsphaseninformation ($\ominus$) der Wechselstromquelle (12) und einem vorbestimmten Grenzwert einer harmonischen Stromquellenregulation; und

einen Halbleiterschaltersteuerungsbereich (122), der konfiguriert ist, einen Quotienten aus einem Kurzschluss und einem Öffnen des Halbleiterschalters (16) zu steuern, basierend auf einer Differenz zwischen Befehlsinformation, die gebildet wird **durch** den Halbleiterschaltersteuerungsbereich (122) **durch** Subtraktion aktueller Strominformation ausgegeben von dem Gleichrichter (11) von einer Summe aus der Sinuswellenforminformation, gebildet **durch** den Sinuswellenforminformationsbildungsbereich (120) und der Harmonische-Wellenforminformation, gebildet **durch** den Harmonische-Wellenforminformations-bildungsbereich (121).

2. Gleichrichtervorrichtung nach Anspruch 1, wobei die harmonische Stromwellenform der Harmonische-Wellenforminformation eine Summe von Sinusfunktionsgruppen ungerader Ordnungen ist, wobei eine Amplitude jeder Ordnung einer Harmonischen im Wesentlichen gleich dem unter der harmonischen Regulation erlaubten Wert gesetzt ist, und jede Ordnung einer Harmonischen eine Nullphase wird, wenn eine Fundamentalwelle, ausgedrückt durch eine Sinusfunktion, eine Nullphase wird.

3. Gleichrichtervorrichtung nach Anspruch 1 oder 2, wobei der Harmonische-Wellenforminformationsbildungsbereich (121) konfiguriert ist, die harmonische Stromwellenform der Harmonische-Wellenforminformation zu dämpfen, wenn die Amplitude der sinusförmigen Stromwellenform der Sinuswellenforminformation kleiner ist als ein vorbestimmter Wert.

4. Gleichrichtervorrichtung nach Anspruch 3, wobei der vorbestimmte Wert ein Stromwert ist, der ungefähr 570 W entspricht.

5. Gleichrichtervorrichtung nach einem der Ansprüche 1 bis 4, wobei der Halbleiterschaltersteuerungsbereich (122) konfiguriert ist, so zu steuern, dass ein Strombefehlswert, bei dem eine Phase der einphasigen Wechselstromquelle (12) 0° oder 180° ist, ersetzt wird durch einen Strombefehlswert einer Phase vor oder nach der Phase von 0° oder der Phase von 180°.

## Revendications

1. Dispositif redresseur pour commander du courant en provenance d'une source de courant alternatif monophasé (12), comprenant:

un redresseur (11) qui est configuré pour redresser le courant en provenance de la source de courant alternatif monophasé (12);

un réacteur (13) qui est relié à une borne de sortie du redresseur (11);

un commutateur à semi-conducteur (16) qui est relié au réacteur (13) et à une autre borne de sortie du redresseur (11);

une portion de lissage (14) qui est reliée à l'autre borne de sortie du redresseur (11) et à un point de connexion du réacteur (13) et du commutateur à semi-conducteur (16) via une diode (17); et

un circuit de commande (119) qui est configuré pour court-circuiter ladite source de courant alternatif monophasé (12) au moyen du commutateur à semi-conducteur (16) par le réacteur (13) et le redresseur (11), et pour commander le courant de la source de courant alternatif monophasé (12) en permettant au courant parcourant le réacteur (13) de circuler dans la portion de lissage (14) via la diode (17) lorsque le commutateur à semi-conducteur (16) est ouvert;

dans lequel le circuit de commande (119) est **caractérisé par**:

une portion de formation d'information de forme d'onde sinusoïdale (120) qui est configurée pour former de l'information de forme d'onde sinusoïdale ayant une forme d'onde sinusoïdale dont l'amplitude est ajustée sur la base de l'information de phase de tension alternative ($\ominus$) de la source de courant alternatif (12) et d'une différence entre des informations de tension continue ($V_{DC}$) des deux extrémités de la portion de lissage (14) et une information de tension continue désirée ($V_{DC*}$);

une portion de formation d'information de forme d'onde harmonique (121) qui est configurée pour former de l'information de forme d'onde harmonique sur la base de l'information de phase de tension alternative ($\ominus$) de la source de courant alternatif (12) et d'une valeur limite prédéterminée d'une régulation harmonique de source de courant; et

une portion de commande de commutateur à semi-conducteur (122) qui est configurée pour commander un rapport d'un court-circuit et d'une ouverture du commutateur à semi-conducteur (16), sur la base d'une différence entre de l'information de commande qui est formée par ladite portion de commande de commutateur à semi-conducteur (122) en soustrayant de l'information actuelle de courant délivrée par le redresseur (11), d'une somme de l'information de forme d'onde sinusoïdale formée par ladite portion de formation d'information de forme d'onde sinusoïdale (120) et de l'information de forme d'onde harmonique formée par ladite portion de formation d'information de forme d'onde harmonique (121).

2. Dispositif redresseur selon la revendication 1, dans lequel la forme d'onde de courant harmonique de l'information de forme d'onde harmonique est une somme de groupes de fonctions sinusoïdales d'ordres impairs, dans lequel une amplitude de chaque ordre d'une harmonique est établie de manière à être pour l'essentiel égale à la valeur admissible sous la régulation harmonique, et chaque ordre d'une harmonique devient une phase zéro lorsqu'une onde fondamentale exprimée par une fonction sinusoïdale devient une phase zéro.

3. Dispositif redresseur selon la revendication 1 ou 2, dans lequel ladite portion de formation d'information de forme d'onde harmonique (121) est configurée pour atténuer la forme d'onde de courant harmonique de l'information de forme d'onde harmonique lorsque l'amplitude de la forme d'onde de courant sinusoïdale de l'information de forme d'onde sinusoïdale est inférieure à une valeur prédéterminée.

4. Dispositif redresseur selon la revendication 3, dans lequel la valeur prédéterminée est une valeur de courant correspondant à 570 W à peu près.

5. Dispositif redresseur selon l'une quelconque des revendications 1 à 4, dans lequel ladite portion de commande de commutateur à semi-conducteur (122) est configurée pour commander de telle manière qu'une valeur de commande de courant à laquelle une phase de la source de courant alternatif monophasé (12) est de 0° ou 180° est remplacée par une valeur de commande de courant d'une phase avant ou après la phase de 0° ou de la phase de 180°.

Fig.1

Fig.2

*Fig.3*

# Fig.4

(a)  AC  VOLTAGE

(b)  AC  CURRENT

(c)  INSTANTANEOUS  POWER

AVERAGE  POWER

INPUT  POWER  1.5  kW

## Fig.5

(a)  AC VOLTAGE

(b)  AC CURRENT

84%

(c)  INSTANTANEOUS POWER

75%

AVERAGE POWER

INPUT POWER 1.5 kW

*Fig.6*

(a) AC VOLTAGE

(b) AC CURRENT

(c) INSTANTANEOUS POWER

AVERAGE POWER

INPUT POWER 3 kW

# Fig.7

(a) AC VOLTAGE

(b) AC CURRENT

87%

(c) INSTANTANEOUS POWER

87%

AVERAGE POWER

INPUT POWER 3 kW

# Fig.8

(a) AC VOLTAGE

(b) AC CURRENT

(c) INSTANTANEOUS POWER

AVERAGE POWER

THERE IS DC RIPPLE

# Fig.9

(a)  AC VOLTAGE

(b)  AC CURRENT

(c)  INSTANTANEOUS POWER

AVERAGE POWER

DC RIPPLE IS ZERO

*Fig.10*

EP 2 793 386 B1

*Fig.11*

EP 2 793 386 B1

CONTROL CIRCUIT

# Fig.12

(a)   AC VOLTAGE

(b)   AC CURRENT COMMAND

(c)   ABSOLUTE VALUE OF
      AC CURRENT COMMAND

(d)   ABSOLUTE VALUE OF
      ACTUAL AC CURRENT

(e)   ACTUAL AC CURRENT

0                  180              360

PHASE (deg)

# Fig.13

(a) AC VOLTAGE

(b) AC CURRENT COMMAND

(c) ABSOLUTE VALUE OF
AC CURRENT COMMAND

(d) ABSOLUTE VALUE OF
ACTUAL AC CURRENT

(e) ACTUAL AC CURRENT

0                    180                   360

PHASE (deg)

Fig.14

# Fig.15

(a)   $V_{11}$

(b)   $V_{23}$

(c)   $V_{24}$

(d)   Vin

(e)   RIPPLE VOLTAGE   Vout

**EP 2 793 386 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100014326 A1
- JP S6474060 B
- JP 2001045763 A